# EUROPÄISCHE PATENTSCHRIFT

(11) **EP 3 404 256 B1**
(45) Veröffentlichungstag und Bekanntmachung des Hinweises auf die Patenterteilung: **13.05.2020**
(21) Anmeldenummer: 18000406.1
(22) Anmeldetag: 25.04.2018
(51) Int. Cl.: F03D 7/02, F03D 7/04, F03D 1/06, F03D 15/00, F03B 13/26, F03B 17/06

(54) **VORRICHTUNG ZUR VERSTELLUNG DER ROTORBLÄTTER EINER STRÖMUNGSKRAFTANLAGE**
DEVICE FOR ADJUSTING THE ROTOR BLADES OF A FLOW FORCE INSTALLATION
DISPOSITIF D'AJUSTEMENT DES PALES DE ROTOR D'UNE INSTALLATION GÉNÉRATRICE D'ÉNERGIE À FLUX

(30) Priorität: 18.05.2017 DE 102017004909
(43) Veröffentlichungstag der Anmeldung: 21.11.2018
(73) Patentinhaber: Enbreeze GmbH, 13053 Berlin (DE)
(72) Erfinder: Dabrowski, Jan, 72770 Reutlingen (DE); Sureshkumar, Sudheesh, 12437 Berlin (DE); Loth, Thorsten, 07743 Jena (DE); von Breitenbach, Alexander, 12053 Berlin (DE); Dorn, Immanuel, 12051 Berlin (DE)

(56) Entgegenhaltungen:
- WO-A1-2014/012591
- CH-A- 222 336
- FR-A- 447 171
- US-A- 1 555 349

## Beschreibung

Die Erfindung betrifft eine Strömungskraftanlage, insbesondere Windkraftanlage oder Wasserkraftanlage, welche einen Rotor mit einer Rotornabe und mit zumindest einem Rotorblatt, das an der Rotornabe um die Rotorblattachse verstellbar gelagert ist, wobei die Rotorblattachse in Strömungsrichtung angeordnet ist und durch ein Zusammenwirken eines auf das Rotorblatt einwirkenden Auftriebsmoments, das durch die auf das Rotorblatt einwirkende Strömung, insbesondere Wind, um die Rotorblattachse erzeugt wird, und eines Generatormoments, das von dem Generator auf die Generatornabe wirkt. Bei der Strömungskraftanlage gemäß der Erfindung handelt es sich vorzugsweise um eine Windkraftanlage, sie kann jedoch auch als Wasserkraftanlage, z.B. als Gezeitenkraftwerk, ausgebildet sein.

Eine Windkraftanlage arbeitet optimal, wenn die Rotordrehzahl auf die Windgeschwindigkeit abgestimmt ist. Dabei muss auf die Kombination der Regelkonzepte für Rotor (Stall, aktiver Stall oder Pitch) und Generator (drehzahlkonstant, zweistufig oder variabel) Rücksicht genommen werden.

Ziel ist es eine Verstellung der Rotorblätter in Abhängigkeit der Windgeschwindigkeit zu ermöglichen und somit die Kräfte auch bei hohen Windgeschwindigkeiten konstant zu halten oder zu reduzieren. Ab Nennleistung wird das Moment des Generators auf einen konstanten Wert gesetzt, so dass die Leistung nicht weiter ansteigen kann. Die Herausforderung hierbei ist auch bei steigenden Windgeschwindigkeiten und somit Leistung am Rotorblatt die Drehzahl der Anlage konstant gehalten.

Heute wird praktisch nur noch die aktive Pitchregelung eingesetzt. Dies bedeutet, dass die Rotorblätter nur noch im Anstellwinkelbereich von Nullauftrieb bis Maximalauftrieb gesteuert werden (Anstellwinkel ca. -5° bis +15°). Aktive Stellmotoren ändern den Anstellwinkel des Rotorblattes in Abhängigkeit von Windgeschwindigkeit und Generatorlast. Der Generator bringt ein Gegenmoment zum Rotor auf. Bei mehr Einspeisung ins Netz, bremst er mehr.

Die Leistungs-/Geschwindigkeitsregelung einer Strömungskraftanlage erfolgt neben der Regelung über das Netz über die Rotorblätter. Bei einer Pitchregelung ist es möglich, die Rotorblätter einer Windkraftanlage um ihre Längsachse zu verstellen, d.h. bei weniger Wind stehen die Blätter mehr im Wind, je mehr der Wind zunimmt, desto stärker werden die Blätter aus dem Wind gedreht. Drehzahlvariable, pitchgeregelte Anlagen stellen heute den Stand der Technik im Windkraftanlagenbau dar.

Pitchgeregelte Anlagen drehen ihre Blätter in Segelstellung und gehen in den Trudelbetrieb. Bei einer Anlage mit Blattwinkelregelung misst der elektronische Regler ständig die Leistungsabgabe der Anlage. Wenn diese zu hoch ist, wird dem Blattverstellmechanismus ein Kommando geschickt, damit er die Rotorblätter sofort leicht aus dem Wind dreht. Umgekehrt werden die Blätter in den Wind gedreht, wenn der Wind wieder nachlässt.

Die Konstruktion von Anlagen mit Blattwinkelregelung erfordert einiges an ingenieursmäßigem Geschick, damit sich die Rotorblätter genau um den gewünschten Winkel verstellen. Bei derartigen Anlagen verstellt der Regler die Blätter auch dann um ein paar Grad, wenn sich die Windgeschwindigkeit ändert. So wird sichergestellt, dass die Rotorblätter immer im richtigen Winkel stehen, um bei allen Windgeschwindigkeiten das Maximum an Energie herauszuholen.

Aus der DE 20017994 U1 ist ein Pitchantrieb für Windkraftanlagen mit einer hybriden Ausführung bekannt, d. h. mit elektrischer und hydraulischer Ausführung in Kombination. Neben einem Elektromotor kommt hierbei pro Rotorblatt noch ein Hydraulikmotor (Schnelllaufender Hydraulikmotor, z. B. Zahnradmotor) mit zugehörigem Hydraulik-Aggregat zum Einsatz, der bei Ausfall der Versorgungsspannung für die E-Motoren oder bei Not-Aus das Rotorblatt in die sogenannte Fahnenstellung, d. h. aus dem Wind, dreht und dadurch die aerodynamische Bremsung bewirkt. Der Hydraulikmotor kann dabei entweder in Reihe mit dem E-Motor auf einer Welle arbeiten oder an einer separaten Antriebswelle des Planetengetriebes. Im Normalbetrieb der WKA wird der Hydraulikmotor nur passiv mitgeführt und fördert das Öl im Hydraulikkreislauf drucklos um.

In der EP2698533 wird ein elektrisch-hydraulischer Pitchantrieb beschrieben, der sowohl einen elektrischen Pitchantrieb als auch einen hydraulischen Pitchantrieb aufweist. Der elektrische Pitchantrieb weist insbesondere ein Getriebe, Steuerungselektronik und Sensorik auf. Die Kraftübertragung von dem hydraulischen Pitchantrieb auf das Rotorblatt erfolgt mechanisch unabhängig von der Kraftübertragung von dem elektrischen Pitchmotor auf das Rotorblatt. Dies bedeutet, dass die Kraft die durch den hydraulischen Pitchantrieb aufgebracht wird an einer anderen Stelle in das Rotorblatt eingeleitet wird. Dies kann insbesondere dadurch erreicht werden, dass der hydraulische Pitchantrieb mittels eines Gelenks, insbesondere eines Drehgelenks, an dem Rotorblatt angreift. Vorzugsweise weist der hydraulische Pitchantrieb hierzu ein Stellorgan auf, welches insbesondere als Hydraulikzylinder ausgebildet sein kann, wobei der Hydraulikzylinder eine Zylinderkolbenstange aufweist, an dem freien Ende der Zylinderkolbenstange ein Gelenk angeordnet ist und das Gelenk an dem Rotorblatt angreift. Durch eine Bewegung des Zylinderkolbens und somit auch der Zylinderkolbenstange kann eine Kraft auf das Rotorblatt übertragen werden, die das Rotorblatt in die Fahnenstellung dreht.

Die DE102006023411 beschreibt eine Rotorblattverstelleinrichtung zum Verstellen des Anstellwinkels eines auf einer Rotorwelle drehbar angeordneten Rotorblatts einer Windkraftanlage. Die Rotorblattverstelleinrichtung ist mit einem ersten elektromotorischen Antrieb ausgestattet. Dieser umfasst einen aus einem Stromnetz versorgbaren Frequenzumrichter und einen aus dem Frequenzumrichter speisbaren bürstenlosen ersten Elektromotor. Weiter ist ein Bereitschaftsenergiespeicher, der eine Gleichspannung bereitstellt, vorhanden. Die Besonderheit der vorliegenden Erfindung ist es, dass ein zweiter elektromotorischer Antrieb vorhanden ist, mit dem das Rotorblatt bei einem Ausfall des ersten elektromotorischen Antriebs verstellbar ist, und dass der zweite elektromotorische Antrieb einen aus dem Bereitschaftsenergiespeicher mit Gleichstrom speisbaren zweiten Elektromotor umfasst.

Der Nachteil derartiger Regelvorrichtungen besteht insbesondere darin, dass sie sehr aufwendig zu realisieren sind und zusätzliche Sensoren und Stellglieder für die Verstellung der Rotorblätter erfordern.

Insbesondere für kleinere Windkraftanlagen sind auch rein mechanisch wirkende Pitchantriebe bekannt.

Eine solche Windkraftanlage ist in der DE 904 400 beschrieben, welche eine sogenannte passive Pitch-Regelung, also eine passive Regelung des Anstellwinkels der Rotorblätter zum Wind, aufweist. Offenbart ist ein Verfahren zur Pitch-Regelung, das durch das Kräfteverhältnis zwischen Auftriebskraft und Vortriebskraft definiert wird. Überwiegt die durch das benötigte Windraddrehmoment bedingte Verstellkraft, so drehen sich die Flügel in den Wind; überwiegt die durch das Luftkraftmoment hervorgerufene Gegenkraft, so drehen sie sich wieder zurück. Zur Erzielung des angestrebten Effektes wird das der Kraftübertragung dienende Getriebeteil auf der Windradwelle oder der entsprechend gebauten Nabe des Windrades gleichachsig drehbar gelagert und durch eine geeignete Mitnehmervorrichtung mit den ebenfalls drehbar gelagerten Flügelruten beweglich verbunden.

Neben der oben beschriebenen Pitch-Regelung sind bei kleineren Windkraftanlagen auch andere passive Regelungskonzepte bekannt. Meist werden die Fliehkräfte der Anlage genutzt, um die Rotorblätter bei hohen Drehzahlen aus dem Wind zu drehen. Ein solches System ist zum Beispiel aus der CH 230132 A bekannt. Solche Systeme haben jedoch den Nachteil, dass die Leistung und die Belastungen erst bei hohen Drehzahlen reduziert werden und das System eine gewisse Trägheit aufweist. Tritt plötzlich eine Windböe auf, so erfolgt aufgrund der Trägheit des Systems zunächst keine Regelung der Rotorblätter, so dass die Anlage höher und ggf. zu hoch belastet wird.

Eine weitere rein mechanisch wirkende Vorrichtung zur Pitchregelung ist in der EP 2885533 beschrieben, die ein Verstellen der Rotorblätter um die Rotorblattachse bewirkt und eine passive Pitchregelung darstellt. Die Strömungskraftanlage weist eine Generatornabe auf, die mit einem elektrischen Generator antriebsverbunden ist, wobei die Rotornabe und die Generatornabe relativ zueinander drehbar sind, sowie eine Koppelvorrichtung, die die Rotornabe mit der Generatornabe derart koppelt, dass eine Drehbewegung des Rotorblatts um die Rotorblattachse eine Drehbewegung der Rotornabe relativ zur Generatornabe bewirkt, wobei die Koppelvorrichtung im Betrieb ein Verstellen des Rotorblatts in der Rotornabe, in Abhängigkeit von der Strömungsgeschwindigkeit ermöglicht.

In der DE 2020009012104 wird eine Windkraftanlage beschrieben, bei der die Rotorblätter in einer Nabe angeordnet sind und durch die Windkraft entgegen der Kraft eines Federelements in radialer Richtung verstellbar sind. Jedes Rotorblatt ist über einen Gelenkhebel mit der Nabe verbunden so dass eine radiale Verstellbewegung der Rotorblätter bewirkt wird.

Die DE 102013008218 beschreibt eine Rotorblattwinkelverstellung bei der die in V-Stellung an einem Synchronisierungsgleitstück beweglich befestigten Rotorblätter in Richtung Rotationsebene gedrückt bzw. durch den Auftrieb gezogen werden. Durch Schwenkhebel und Verstellhebel wird bei der Rotorblattpositionsverstellung in Richtung Rotationsebene eine gleichzeitige Drehbewegung aller Rotorblattgestänge erreicht. Durch die Rotorblattwinkelvergrößerung lässt der Auftrieb nach und die Drehzahl verringert sich. Die Rotorblattverstellung erfolgt gegen die Kraft eines zentralen Federmechanismus. Die Federvorspannung ist dabei variabel.

In der US1,555,349 wird eine Windkraftanlage beschrieben, die über Radschaufeln verfügt, die schwenkbar zwischen zwei Ringen (32) angeordnet sind. Diese beiden Ringe sind zueinander beabstandet und in Abhängigkeit von deren Abstand verändert sich die Stellung der Schaufeln zur Windrichtung. Die beiden Ringe werden durch eine entsprechende Anzahl von Zugfeder zusammengezogen, wobei die Radschaufeln eine größere Angriffsfläche für den Wind bieten. Bei steigender Windgeschwindigkeit wird die Fläche der Radschaufeln gegen den Wind reduziert und die Zugfedern gedehnt.

Die FR 447.171 offenbart eine Windkraftanlage bei der jeder Flügel aus einer flexiblen Klinge, beispielsweise aus Blech besteht. Die Flügelwinkelverstellung erfolgt unter Einwirkung eines Fliehkraftreglers mittels eines pneumatischen Getriebes. Dabei werden die einzelnen Klingen von einer planen Fläche in eine konkave Fläche verformt. Die hier vorgestellte Lösung hat den Nachteil, dass eine Verformung des Flügels in Bezug auf die Windrichtung im Wesentlichen von den Materialkonstanten, wie beispielsweise Festigkeit, Stärke und Elastizität bestimmt wird. Dieses Verbiegen der Klingen ist aber auch wieder einer Federkraft gleichzusetzen, die der Windkraft entgegengesetzt wird. Außerdem ändern sich mit der Zeit die Biegekräfte. Somit ist eine stets definierte Verstellung nicht ohne weiteres möglich.

Eine weitere Windkraftanlage ist aus CH 222336 A bekannt.

Bei den vorgenannten Lösungen erfolgt die Verstellung der Rotorblätter bzw. Radschaufeln gegen eine voreingestellte Federkraft, die der Windkraft entgegenwirkt.

Ausgehend von diesem Stand der Technik besteht die Aufgabe der vorliegenden Erfindung darin, eine Vorrichtung zur Pitchregelung anzugeben, die mit rein mechanischen Mitteln und wenigen einfachen Bauteilen eine zuverlässige Verstellung der Rotorblätter in Abhängigkeit von der Strömungsgeschwindigkeit des Mediums gewährleistet.

Diese Aufgabe wird mit einer Vorrichtung gelöst, die die Merkmale des Patentanspruchs 1 aufweist.

Die erfindungsgemäße Vorrichtung zur Verstellung der Rotorblätter einer Strömungskraftanlage weist eine Generatorwelle auf, die in axialer Richtung zur Windrichtung ausgerichtet und auf der auch die Rotornabe angeordnet ist. Die Achsen der Rotorblätter sind nahezu radial zur Generatorwelle angeordnet mit einem "Coning-Winkel", der bis zu 10 Grad beträgt. Dabei sind die Wellen der Rotorblätter in der Rotornabe drehbar angeordnet. Die Rotornabe selbst ist auf der Generatorwelle linear verschiebbar und auf dieser drehbar angeordnet. Mit der Generatorwelle ist eine Steuerscheibe fest verbunden. Zur mechanischen Kopplung zwischen Generatorwelle und der Rotornabe sind zwischen Rotornabe und Steuerscheibe erste Verbindungselemente angeordnet, welche das Vortriebsmoment der Rotorblätter, welches auf die Rotornabe übertragen wird, von der Rotornabe auf die Generatorwelle übertragen. Diese ersten Verbindungselemente sind so angeordnet, dass sie eine Kraft entgegen der Generatorkraft aufbauen. Diese ersten Verbindungselemente sind einerseits schwenkbar auf einem Radius der Steuerscheibe befestigt und andererseits ebenfalls schwenkbar auf einem Radius der Rotornabe befestigt, über die die Kraftübertragung zwischen Rotornabe und Generatorwelle erfolgt. Die ersten Verbindungselemente sind geometrisch so positioniert, dass ein Kräftegleichgewicht zwischen Schubkraft des Rotors und der Kraft, welche vom Generator her anliegt, entsteht.

Jeweils zweite Verbindungselemente sind einerseits schwenkbar auf einem Radius der Steuerscheibe und andererseits schwenkbar mit einem Rotorblatt verbunden. Eine Verschiebung der Rotornabe auf der Generatorwelle durch unterschiedlichen Rotorschub bewirkt somit gleichzeitig eine Drehung der Rotorblätter. Durch entsprechende Dimensionierung der zweiten Verbindungselemente und ihrer Anordnung auf der Steuerscheibe sowie der Rotorblätter kann eine exakte Winkelverstellung der Rotorblätter in Abhängigkeit von der Strömungsgeschwindigkeit gewährleistet werden.

Die Anordnung ist so gewählt, dass dies dazu führt, dass sich der aerodynamische Anstellwinkel des Rotorblattes bei steigender Strömungsgeschwindigkeit verkleinert.

Bei Veränderung des Abstandes zwischen der Steuerscheibe und der Rotornabe durch äußere Krafteinwirkung verändern sich einerseits die Winkel zwischen den ersten Verbindungselementen zur Rotornabe sowie zur Steuerscheibe als auch die Winkel zwischen den zweiten Verbindungselementen zur Steuerscheibe als auch die Winkel zum Rotorblatt. Dadurch erfolgt eine Drehung des Rotorblattes um die Rotorblattwelle und somit seine Ausrichtung /Anstellwinkel zum Wind.

Zwischen der Steuerscheibe und der Rotornabe ist vorteilhafterweise eine Feder angeordnet.

An den Rotorblättern sind vorteilhafterweise Hebel, sogenannte Pitchhebel angebracht, an welchen die zweiten Verbindungselemente schwenkbar befestigt sind, die andererseits ebenfalls schwenkbar mit der Steuerscheibe verbunden sind.

Vorteilhafterweise sind am Rotorblatt zusätzlich Gewichte in radialem Abstand zur Rotorblattwelle angeordnet, die eine Schwingungsdämpfung bewirken sollen. Ein oder mehrere Verbindungselemente können im Sicherheitsfall, z. B. Auftreten besonders hoher Kräfte, voneinander entkoppelt werden. Alternativ können ein oder mehrere Verbindungselemente in ihrer Länge verändert. Die Längenänderung kann durch mechanische oder elektrische Antrieb realisiert werden.

Die Verbindungselemente werden vorzugsweise mit Kugelgelenken mit den jeweiligen Anschlagspunkten an der Steuerscheibe, der Rotornabe oder dem Rotorblatt bzw. den Pitchhebeln verbunden.

Weitere vorteilhafte Ausgestaltungen der Erfindung sind den Unteransprüchen zu entnehmen.

Die Vorteile der erfindungsgemäßen Lösung bestehen insbesondere darin, dass diese Vorrichtung rein mechanisch wirkt und somit keine zusätzlichen Erfassungsglieder und keine elektrischen bzw. hydraulischen Stellglieder notwendig sind. Die Vorrichtung ist mit wenigen Bauteilen robust aufgebaut und arbeitet zuverlässig. Es sind keinerlei Wartungsarbeiten erforderlich. Diese Vorrichtung kann für Windkraftanlagen genauso wie für Wasserkraftanlagen eingesetzt werden um eine einfache Verstellung der Rotorblätter im strömenden Medium zu bewirken.

Die erfindungsgemäße Vorrichtung wird anhand eines Ausführungsbeispiels näher erläutert. Im Ausführungsbeispiel wird eine Windkraftanlage mit drei Rotorblättern, die auf einer Rotornabe angeordnet sind, beschrieben, wobei die Generatorwelle axial zur Windrichtung ausgerichtet ist. Die drei Rotorblätter sind gleichmäßig auf dem Umfang der Rotornabe, mit jeweils 120° Versatz, verteilt und die Stümpfe der Rotorblattwellen sind dabei in Aufnahmen der Rotornabe eingelassen so dass die Kräfte von den Rotorblättern auf die Rotornabe übertragen und in eine Drehbewegung umgesetzt werden. Die Rotorblattwellen sind in den Aufnahmen drehbar angeordnet, so dass die Stellung der Rotorblätter um ihre Achse und somit in Bezug auf die Windrichtung veränderbar ist.

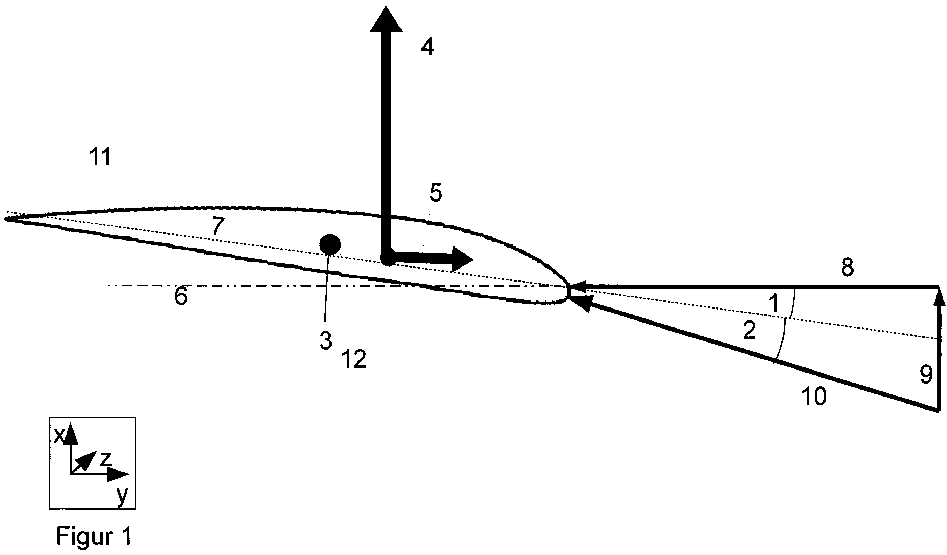

An Hand der Fig.1 werden die Kräfte, die auf ein Rotorblatt wirken, beschrieben. Da es sich vorliegend um eine Windkraftanlage nach dem Auftriebsläuferprinzip handelt, weist das Profil eine übliche Form analog den Verhältnissen an einer Flugzeugtragfläche auf. Es ist der Schnitt durch das Rotorblatt 11 im kartesischen Koordinatensystem dargestellt. Die Länge des Rotorblattes verläuft in z-Richtung. Das Rotorblatt 11 ist um die Rotorblattwelle 3 drehbar gelagert, wobei das Profil des Rotorblatts 11 eine Profilsehne 7 aufweist, welche sich durch die am weitesten voneinander entfernten Profilpunkte erstreckt. Im dargestellten Fall ist die Profilsehne 7 um den Blattwinkel 1 (δ) zur Rotorebene 6 angestellt. Das Rotorblatt 11 dreht sich mit der Umlaufgeschwindigkeit 8 (vᵤ) um die Generatorwelle 19. Der Wind strömt mit der Windgeschwindigkeit 9 (v_{w}) in x-Richtung gegen das Rotorblatt 11. Zusammen mit der Umfangsgeschwindigkeit 8 (vᵤ), mit welcher das Rotorblatt 11, aufgrund der Drehbewegung um die Generatorwelle 19, angeströmt wird, ergibt sich eine resultierende Anströmgeschwindigkeit 10 (vₐₙ). Der aerodynamische Anstellwinkel 2 (α) wird zwischen der Profilsehne 7 und der Richtung der resultierenden Anströmgeschwindigkeit 10 (Vₐₙ) aufgespannt Aufgrund des aerodynamischen Profils des Rotorblatts 11 und der Anstellung desselben wird einerseits eine Rotorschubkraft 4 erzeugt, die in Richtung der Windgeschwindigkeit 9 (v_{w}) und der Generatorwelle 19 wirkt und andererseits eine Vortriebskraft 5 erzeugt, die in Drehrichtung wirkt und die Drehung des Rotorblatts 11 um die Generatorwelle 19 bewirkt. Die Rotorschubkraft 4 und die Vortriebskraft 5 greifen im Punkt 12 (c/4-Punkt), der auf der Profilsehne 7 des Rotorblattes 11 liegt, an.

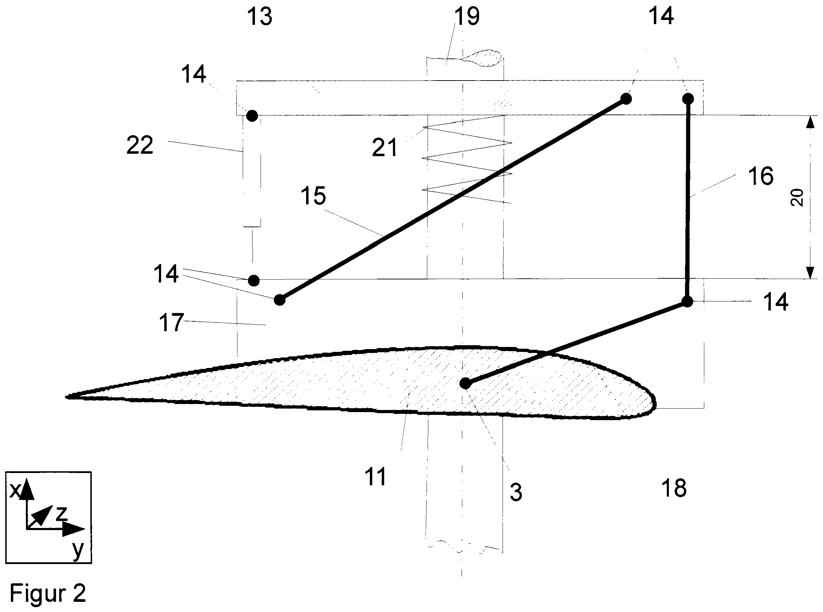

In der Fig.2 ist eine Prinzipskizze einer Seitenansicht der Generatorwelle 19, der Rotornabe 17 und eines Rotorblattes 11 dargestellt. Die Fig. 2 zeigt die Vorrichtung im Normalzustand, d. h. die Rotorblätter sind mit einem optimalen aerodynamischen Anstellwinkel 2 (α) eingestellt, so dass die Windkraftanlage im optimalen Zustand gefahren wird. Der Abstand 20 (A) zwischen der Steuerscheibe 13 und der Rotornabe 17 beträgt ca. a1= 170 mm.

Die Rotornabe 17 ist auf der Generatorwelle 19 in Längsrichtung (x-Richtung) verschiebbar und um die Generatorwelle 19 drehbar angeordnet. Mit der Generatorwelle 19 ist eine Steuerscheibe 13 fest verbunden. Die Rotornabe 17 ist mit dieser Steuerscheibe 13 mittels erster Verbindungselemente, die im gewählten Beispiel als Koppelstangen 15 ausgeführt sind, derart verbunden, dass die Vortriebskraft 5 eine Drehbewegung der Rotornabe 17 mit den Rotorblättern 11 direkt eine analoge Drehbewegung der Generatorwelle 19 bewirkt. Die Drehzahl der Rotornabe 17 ist somit identisch mit der Drehzahl der Generatorwelle 19. Die Vortriebskraft 5 wird somit von der Rotornabe 17 mittels der Koppelstangen 15 auf die Generatorwelle 19 übertragen. Dadurch, dass die Rotornabe 17 auf der Generatorwelle 19 in x-Richtung verschiebbar angeordnet ist, ist der Abstand 20 (A) zwischen der Steuerscheibe 13 und der Rotornabe 17 in Abhängigkeit Windgeschwindigkeit 9 (v_{w}) und somit dem Rotorschub 4 veränderlich. Bei Erhöhung des Rotorschubes 4 in x-Richtung wird sich der Abstand 20 (A) zwischen der Steuerscheibe 13 und der Rotornabe 17 verringern. Bei Verringerung des Abstandes 20 (A) verändern sich auch die Winkel der zweiten Verbindungselemente, die im gewählten Beispiel als Steuerstangen 16 ausgeführt sind, einerseits zur Steuerscheibe 13 und andererseits zum Pitchhebel 18 am Rotorblatt 11. Über den Pitchhebel 18 wird eine Verstellung der Rotorblattwelle 3 und damit des Rotorblattes 11 zur Windrichtung bewirkt. Dadurch wird bei stärkerem Wind, d. h. bei höherer Windgeschwindigkeit 9 (v_{w}) das Rotorblatt 11 aus dem Wind gedreht, indem der aerodynamische Anstellwinkel 2 (α) verkleinert wird. Dadurch wird eine geringere Vortriebskraft 5 auf die Generatorwelle 19 übertragen. Wird die Vortriebskraft 5 geringer, so nimmt auch die Umlaufgeschwindigkeit 8 (vᵤ) ab. Gleichzeitig nimmt der Rotorschub 4 ab, wodurch geringere Kräfte auf die Windkraftanlage wirken.

Die Anschlagspunkte der Koppelstangen 15 sind auf der Steuerscheibe 13 und auf der Rotornabe 17 jeweils konzentrisch zur Generatorwelle 19 angeordnet. Die Anschlagspunkte der Steuerstangen 16 sind auf der Steuerscheibe 13 ebenfalls konzentrisch zur Generatorwelle 19 angeordnet. An ihrem anderen Ende sind die Steuerstangen 16 drehbar mit den Pitchhebeln 18 verbunden. Die Pitchebel 18 sind andererseits mit der Rotorblattwelle 3 starr verbunden. Die Koppelstangen 15 und die Steuerstangen 16 sind jeweils mittels Kugelgelenken 14 auf der einen Seite mit der Steuerscheibe 13 und auf der anderen Seite mit der Rotornabe 17 bzw. den Pitchhebeln 18 am Rotorblatt 11 verbunden, damit die unterschiedlichen Abstände 20 (A) zwischen Steuerscheibe 13 und Rotornabe 17 und der unterschiedlichen Winkel ausgeglichen werden können. Ein oder mehrere Koppelstangen 15 und Steuerstangen 16 können gegebenenfalls von der Steuerscheibe 13 und/oder der Rotornabe 17 bzw. den Rotorblättern 11 entkoppelt oder in ihrer Länge verändert werden, um im Bedarfsfall die Anlage in einen sicheren Zustand zu überführen. Die Längenänderung der Koppelstangen 15 und Steuerstangen 16 kann durch mechanische oder elektrische Antriebe erfolgen.

Zwischen der Steuerscheibe 13 und der Rotornabe 17 ist eine Druckfeder 21, im gewählten Beispiel eine Spiral-Druckfeder konzentrisch zur Generatorwelle 19 (um die Generatorwelle herum) angeordnet und an der Steuerscheibe 13 befestigt. Im Normalzustand ist diese Druckfeder 21 unbelastet bzw. wird von der Rotornabe 17 nicht berührt. Wird die Rotornabe 17 bei steigender Windgeschwindigkeit 9 (v_{w}) in Richtung Steuerscheibe 13 bewegt, wirkt die Druckfeder 21 ab einem bestimmten Abstand 20 (A) dämpfend auf die Linearbewegung der Rotornabe 17, so dass kurzfristige Änderungen der Windgeschwindigkeit 9 (v_{w}), z. B. durch Windböen nicht sofort eine Verstellung der Rotorblätter 11 bewirken und die Anlage ruhiger arbeitet. Andererseits bewirkt diese Druckfeder 21, dass bei sehr geringen Windgeschwindigkeiten bzw. keinem Wind 9 (v_{w}) die Rotorblätter 11 sofort wieder in ihre Ausgangslage zurückgedreht werden und die Anlage schnell wieder anlaufen kann.

Zur besseren Schwingungsdämpfung der Anlage ist zusätzlich mindestens ein Schwingungsdämpfer 22 zwischen der Steuerscheibe 13 und der Rotornabe 17 in axialer Richtung zur Generatorwelle 19 angeordnet.

Zur weiteren Schwingungsdämpfung der Rotorblätter 11 können an den Rotorblättern 11 zusätzlich Dämpfungsgewichte in radialem Abstand zur Rotorblattwelle 3 vorgesehen werden.

Durch die Anordnung der Druckfeder 21, des Schwingungsdämpfers 22 und der optionalen Dämpfungsgewichte wird die mechanische Belastung aller Elemente der Windenergieanlage wesentlich reduziert.

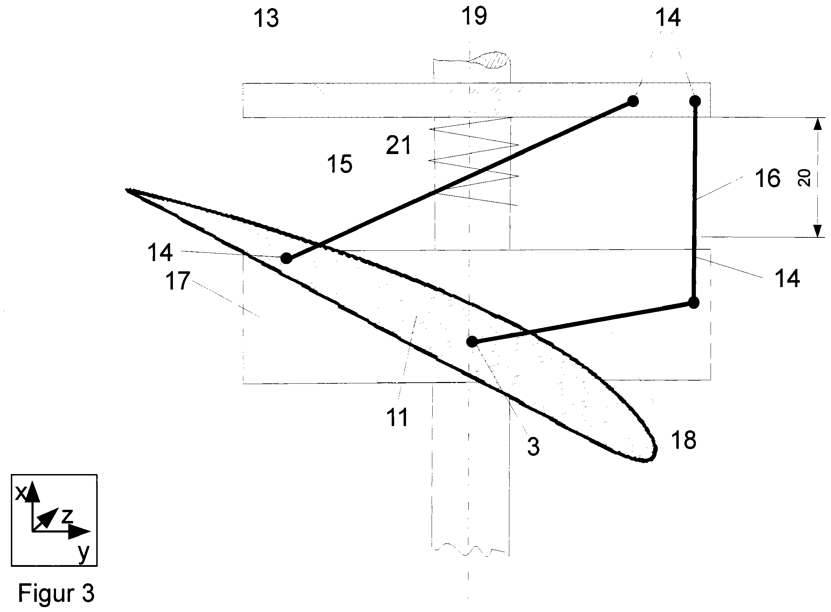

Die Fig. 3 zeigt die Vorrichtung in einem Betriebszustand, der bei erhöhten Windgeschwindigkeiten 9 (v_{w}) zu verzeichnen ist. Die auf die Rotorblätter 11 wirkende höhere Windgeschwindigkeit 9 (v_{w}) bewirkt eine größere Rotorschubkraft 4 auf die Rotornabe 17, wodurch diese auf der Generatorwelle 19 in x-Richtung verschoben wird. Dadurch verringert sich der Abstand 20 (A) zwischen der Steuerscheibe 13 und der Rotornabe 17. Im gewählten Beispiel verringert sich dieser bei erhöhten Windgeschwindigkeiten 9 (v_{w}) auf ca. a2=100 mm. Durch die Änderung des Abstandes von a1 zu a2 wird über die Steuerstange 16 das Rotorblatt 11 um seine Rotorblattwelle 3 gedreht. Die Rotorblätter 11 werden dadurch derart verstellt, dass der veränderte aerodynamischen Anstellwinkel 2 (α) gewährleistet, dass die Windkraftanlage trotz höherer Windgeschwindigkeiten 9 (v_{w}) in einem stabilen Betriebszustand gefahren wird. Die Rotornabe 17 berührt noch nicht die an der Steuerscheibe 13 befestigte Druckfeder 21.

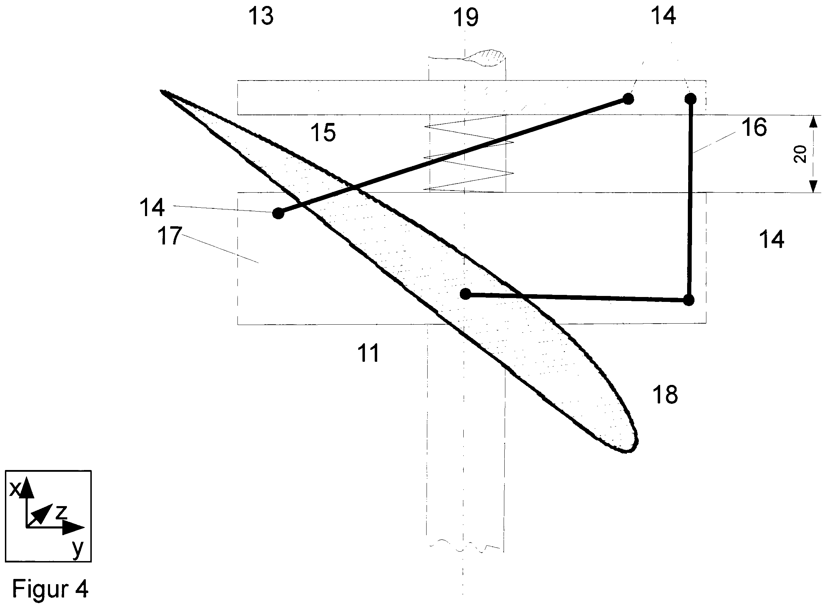

In der Fig. 4 wird eine Seitenansicht der erfindungsgemäßen Vorrichtung bei höheren Anströmgeschwindigkeiten 10 (v_{An}) gezeigt. Die auf die Rotorblätter 11 wirkende noch höhere Windgeschwindigkeit 9 (v_{w}) bewirkt eine noch größere Rotorschub 4 auf die Rotornabe 17, wodurch diese auf der Generatorwelle 19 weiter in x-Richtung verschoben wird. Dadurch verringert sich der Abstand 20 (A) zwischen der Steuerscheibe 13 und der Rotornabe 17 weiterhin. Im gewählten Beispiel verringert sich dieser bei diesem Betriebszustand auf ca. a3=50 mm. Die Rotornabe liegt an der Druckfeder 9 an und diese wird gespannt. Durch die Änderung des Abstandes von a2 zu a3 wird über die Steuerstange 16 das Rotorblatt 11 noch weiter um seine Rotorblattwelle 3 gedreht. Die Rotorblätter 11 werden dadurch derart verstellt, dass durch den nun eingestellten aerodynamischen Anstellwinkel 2 (α) von mindestens 60° die Umlaufgeschwindigkeit 8 (vᵤ) gegen Null geht und die Windgeschwindigkeit 9 (v_{w}) keine oder eine nur sehr geringe Vortriebskraft 5 bewirkt. Die Windkraftanlage wird dadurch keinen gefährlichen mechanischen Belastungen ausgesetzt. Bei nachlassender Windgeschwindigkeit 9 (v_{w}) verringert sich der Rotorschub 4 auf die Rotornabe 17 und die Druckfeder 21 entspannt sich wieder und bewirkt so, dass sich der Abstand 20 (A) zwischen der Rotornabe 17 und der Steuerscheibe 13 vergrößert, beispielsweise von a3=50mm auf a2= 100mm. Dadurch wird über die Steuerstangen 16 und die Pitchhebel 18 der aerodynamische Anstellwinkel 2 (α) der Rotorblätter 11 derart verändert, dass wieder eine Vortriebskraft 5 erzeugt wird. Somit kann die Windkraftanlage bei nachlassender Windgeschwindigkeit 9 (v_{w}) schnell wieder in den Normalzustand überführt werden.

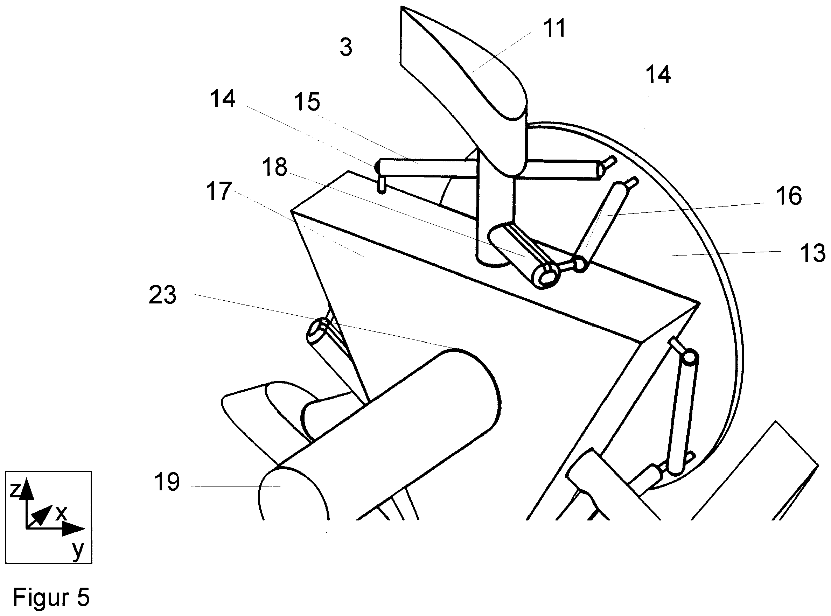

In der Fig. 5 ist eine perspektivische Ansicht der Vorrichtung dargestellt. Auf der Generatorwelle 19 ist die Rotornabe 17 in einem Linear- und Drehlager 23 linear verschiebbar und drehbar angeordnet. Die Rotornabe 17 hat im dargestellten Beispiel den Querschnitt eines gleichseitigen Dreiecks, wobei jeweils in der Mitte der drei Seitenflächen der Rotornabe 17 die Wellen 3 der Rotorblätter 11 drehbar angeordnet sind. Die Rotornabe 17 ist auf der Generatorwelle 19 in Längsrichtung (x-Richtung) verschiebbar und um die Generatorwelle 19 drehbar angeordnet. Mit der Generatorwelle 19 ist eine Steuerscheibe 13 fest verbunden. Die Rotornabe 17 ist mit dieser Steuerscheibe 13 mittels Koppelstangen 15 derart verbunden, dass die Vortriebskraft 5 eine Drehbewegung der Rotornabe 17 bewirkt. Die Koppelstangen 15 sind jeweils mittels Kugelgelenken 14 einerseits mit der Steuerscheibe 13 und andererseits mit der Rotornabe 17 verbunden. Die Steuerstangen 16 sind ebenfalls jeweils mittels Kugelgelenken 14 einerseits mit der Steuerscheibe 13 und andererseits mit dem Pitchhebel 18 verbunden, der seinerseits fest mit der Welle 3 des Rotorblatts 11 verbunden ist. Dadurch, dass die Rotornabe 17 auf der Generatorwelle 19 in x-Richtung verschiebbar angeordnet ist, ist der Abstand 20 (A) zwischen der Steuerscheibe 13 und der Rotornabe 17 in Abhängigkeit von der Windgeschwindigkeit 9 (vw) und somit dem Rotorschub 4 veränderlich. Bei Erhöhung des Rotorschubes 4 in x-Richtung wird sich der Abstand 20 (A) zwischen der Steuerscheibe 13 und der Rotornabe 17 verringern. Bei Verringerung des Abstandes 20 (A) verändern sich auch die Winkel der Steuerstangen 16 einerseits zur Steuerscheibe 13 und andererseits zum Pitchhebel 18, fest mit der Welle 3 des Rotorblatts 11 verbunden ist. Über den Pitchhebel 18 wird eine Verstellung der Rotorblattwelle 3 und damit des Rotorblattes 11 zur Windrichtung bewirkt.

### Aufstellung der verwendeten Bezugszeichen

- 1: Blattwinkel ϑ
- 2: aerodynamischer Anstellwinkel α
- 3: Welle des Rotorblatts
- 4: Rotorschub
- 5: Vortriebskraft
- 6: Rotorebene
- 7: Profilsehne
- 8: Umlaufgeschwindigkeit vu
- 9: Windgeschwindigkeit v_{w}
- 10: Anströmgeschwindigkeit v_{An}
- 11: Rotorblatt
- 12: c/4 - Punkt
- 13: Steuerscheibe
- 14: Kugelgelenk
- 15: Koppelstange
- 16: Steuerstange
- 17: Rotornabe
- 18: Pitchhebel
- 19: Generatorwelle
- 20: Abstand A zwischen Steuerscheibe und Rotornabe
- 21: Druckfeder
- 22: Schwingungsdämpfer

## Patentansprüche

1. Vorrichtung zur Verstellung der Rotorblätter einer Strömungskraftanlage, insbesondere einer Windkraftanlage, umfassend eine Generatorwelle (19), einen Generator, eine Rotornabe (17) und mindestens zwei Rotorblätter mit je einer Welle, wobei die Generatorwelle (19) fest mit dem Generator verbunden und in axialer Richtung zur Windrichtung ausgerichtet ist und die Wellen der mindestens zwei Rotorblätter nahezu radial zur Generatorwelle in gleichmäßigem Winkelabstand in der Rotornabe drehbar angeordnet sind, wobei die Rotornabe auf der Generatorwelle linear verschiebbar ist,
wobei die Rotornabe (17) auch drehbar auf der Generatorwelle (19) angeordnet ist und die Generatorwelle (19) über eine mit ihr fest verbundene Steuerscheibe (13) verfügt, die zur Kopplung und Kraftübertragung zwischen Generatorwelle (19) und der Rotornabe (17) mindestens ein erstes Verbindungselement (15) zwischen der Steuerscheibe (13) und der Rotornabe (17) aufweist und je Rotorblatt (11) ein zweites Verbindungselement (16) einerseits an der Steuerscheibe (13) und andererseits am Rotorblatt (11) exzentrisch zu dessen Drehachse (3) befestigt ist so dass der aerodynamische Anstellwinkel α (2) einstellbar ist.

2. Vorrichtung nach Anspruch 1,
**dadurch gekennzeichnet, dass**
die Rotornabe (17) einen runden, dreieckigen, polygonalen oder sternförmigen Querschnitt aufweist.

3. Vorrichtung nach Anspruch 1,
**dadurch gekennzeichnet, dass**
zwischen der Steuerscheibe (13) und der Rotornabe (17) eine Feder (21) in axialer Richtung zur Generatorwelle (19) angeordnet ist.

4. Vorrichtung nach Anspruch 1,
**dadurch gekennzeichnet, dass**
das mindestens eine erste Verbindungselement (15) einerseits schwenkbar auf einem Radius der Steuerscheibe (13) in definiertem Abstand zur Generatorwelle (19) befestigt und andererseits ebenfalls schwenkbar auf einem Radius der Rotornabe (17) in definiertem Abstand zur Generatorwelle (19) befestigt ist und die zweiten Verbindungselemente (16) einerseits schwenkbar auf einem Radius der Steuerscheibe (13) und andererseits schwenkbar mit einem Rotorblatt (11) exzentrisch zu dessen Drehachse (3) verbunden sind.

5. Vorrichtung nach Anspruch 4,
**dadurch gekennzeichnet, dass**
die zweiten Verbindungselemente (16) jeweils mittels eines Pitchhebels (18) mit jeweils einem Rotorblatt (11) verbunden sind.

6. Vorrichtung nach Anspruch 4,
**dadurch gekennzeichnet, dass**
die ersten und zweiten Verbindungselemente (15, 16) vorzugsweise mit Kugelgelenken (14) mit dem jeweiligen Anschlagspunkt auf der Steuerscheibe (13) und der Rotornabe (17) bzw. auf der Steuerscheibe (13) und dem Rotorblatt (11) verbunden sind.

7. Vorrichtung nach Anspruch 1,
**dadurch gekennzeichnet, dass**
ein oder mehrere Verbindungselemente (15, 16) im Bedarfsfall an den Anschlagspunkten entkoppelbar sind.

8. Vorrichtung nach Anspruch 1,
**dadurch gekennzeichnet, dass**
ein oder mehrere Verbindungselemente (15, 16) im Bedarfsfall in ihrer Länge veränderbar sind.

9. Vorrichtung nach Anspruch 8,
**dadurch gekennzeichnet, dass**
die Verbindungselemente (15, 16) mittels mechanischer oder elektrischer Antriebe in ihrer Länge veränderbar sind.

10. Vorrichtung nach Anspruch 1,
**dadurch gekennzeichnet, dass** mindestens ein
Schwingungsdämpfer (22) zwischen der Steuerscheibe (13) und der Rotornabe (17) in axialer Richtung zur Generatorwelle (19) angeordnet ist.

11. Vorrichtung nach Anspruch 1,
**dadurch gekennzeichnet, dass**
an den Rotorblättern (11) zusätzlich Gewichte in radialem Abstand zur Rotorblattwelle (3) angeordnet sind.

## Claims

1. A device for adjusting the rotor blades of a flow force installation, in particular a wind power installation, comprising a generator shaft (19), a generator, a rotor hub (17) and at least two rotor blades each with a shaft, wherein the generator shaft (19) is fixedly connected to the generator and is orientated in an axial direction to the wind direction and the shafts of the at least two rotor blades are arranged rotatably in the rotor hub almost radially with respect to the generator shaft with a uniform angular spacing, wherein the rotor hub is linearly displaceable on the generator shaft, wherein the rotor hub (17) is also arranged rotatably on the generator shaft (19) and the generator shaft (19) comprises a control of disc (13) connected fixedly to it, which comprises at least a first connection element (15) between the control disc (13) and the rotor hub (17) for the coupling and force transmission between the generator shaft (19) and the rotor hub (17) and a second connection element (16) for each rotor blade (11) is fastened on the one hand to the control disc (13) and on the other hand to the rotor blade (11) eccentrically with respect to its rotary axis (3), so that the aerodynamic angle of attack α (2) can be adjusted.

2. The device according to claim 1,
**characterised in that**
the rotor hub (17) has a round, triangular, polygonal or star-shaped cross-section.

3. The device according to claim 1,
**characterised in that**
a spring (21) is arranged between the control disc (13) and the rotor hub (17) in an axial direction with respect to the generator shaft (19).

4. The device according to claim 1,
**characterised in that**
the at least one first connection element (15) is on the one hand fastened in a swivelling manner on a radius of the control disc (13) at a defined distance from the generator shaft (19) and on the other hand is fastened in a swivelling manner on a radius of the rotor hub (17) at a defined distance from the generator shaft (19) and the second connection elements (16) are connected on the one hand in a swivelling manner on a radius of the control disc (13) and on the other hand in a swivelling manner to a rotor blade (11) eccentrically with respect to its rotary axis (3).

5. The device according to claim 4,
**characterised in that**
the second connection elements (16) are each connected by means of a pitch lever (18) to a rotor blade (11) in each case.

6. The device according to claim 4,
**characterised in that**
the first and second connection elements (15, 16) are preferably connected by means of ball-and-socket joints (14) to the respective attachment point on the control disc (13) and the rotor hub (17) respectively on the control disc (13) and the rotor blade (11).

7. The device according to claim 1,
**characterised in that**
one or more connection elements (15, 16) can be decoupled at the attachment points in case of need.

8. The device according to claim 1,
**characterised in that**
one or more connection elements (15, 16) can be changed in their length in case of need.

9. The device according to claim 8,
**characterised in that**
the connection elements (15, 16) can be changed in their length by means of mechanical or electrical drives.

10. The device according to claim 1,
**characterised in that** at least one
vibration damper (22) is arranged between the control disc (13) and the rotor hub (17) in an axial direction with respect to the generator shaft (19).

11. The device according to claim 1,
**characterised in that**
weights are also arranged on the rotor blades (11) with a radial spacing with respect to the rotor blade shaft (3).

## Revendications

1. Dispositif d'ajustement des pales de rotor d'une installation génératrice d'énergie à flux, en particulier d'une éolienne, comprenant un arbre de générateur (19), un générateur, un moyeu de rotor (17) et au moins deux pales de rotor avec chacune un arbre, sachant que l'arbre de générateur (19) est relié fermement au générateur et est orienté dans la direction axiale par rapport à la direction du vent et les arbres d'au moins les deux pales de rotor sont disposés pouvant tourner dans le moyeu de rotor à une distance angulaire régulière à peu près radialement par rapport à l'arbre du générateur, sachant que le moyeu de rotor peut être déplacé de façon linéaire sur l'arbre de générateur, sachant que le moyeu de rotor (17) est également disposé pouvant tourner sur l'arbre de générateur (19) et l'arbre de générateur (19) disposé d'un plateau de commande (13) relié fermement à celui-ci, qui comporte au moins un premier élément de liaison (15) entre le plateau de commande (13) et le moyeu de rotor (17) pour l'accouplement et la transmission de force entre l'arbre de générateur (19) et le moyeu de rotor (17) et qu'à chaque pale de rotor (11) est fixée de façon excentrique à l'axe de rotation (3) de celle-ci un deuxième élément de liaison (16) d'une part au plateau de commande (13) et d'autre part à la pale de rotor de telle manière que l'angle d'incidence aérodynamique α (2) peut être réglé.

2. Dispositif selon la revendication 1,
**caractérisé en ce que**
le moyeu de rotor (17) comporte une section ronde, triangulaire, polygonale ou en forme d'étoile.

3. Dispositif selon la revendication 1,
**caractérisé en ce qu'**
un ressort (21) est disposé en direction axiale par rapport à l'arbre de générateur (19) entre le plateau de commande (13) et le moyeu de rotor (17).

4. Dispositif selon la revendication 1,
**caractérisé en ce qu'**
au moins un premier élément de liaison (15) est fixé d'une part pouvant pivoter sur un rayon du plateau de commande (13) à une distance définie par rapport à l'arbre de générateur (19) et est fixé d'autre part également pouvant pivoter sur un rayon du moyeu de rotor (17) à une distance définie par rapport à l'arbre de générateur (19) et les deuxièmes éléments de liaison (16) sont reliés d'une part pouvant pivoter sur un rayon du plateau de commande (13) et d'autre part pouvant pivoter avec une pale de rotor (11) de façon excentrique par rapport à l'axe de rotation (3) de celle-ci.

5. Dispositif selon la revendication 4,
**caractérisé en ce que**
les deuxièmes éléments de liaison (16) sont respectivement reliés au moyen d'un levier de réglage d'incidence de pale (18) à respectivement une pale de rotor (11).

6. Dispositif selon la revendication 4,
**caractérisé en ce que**
les premiers et deuxièmes éléments de liaison (15, 16) sont reliés de préférence avec des articulation sphériques (14) au point de butée respectif sur le plateau de commande (13) et le moyeu de rotor (17) ou sur le plateau de commande (13) et la pale de rotor (11) .

7. Dispositif selon la revendication 1,
**caractérisé en ce qu'**
un ou plusieurs éléments de liaison (15, 16) peuvent être découplés aux points de butée en cas de besoin.

8. Dispositif selon la revendication 1,
**caractérisé en ce qu'**
un ou plusieurs éléments de liaison (15, 16) peuvent être modifiés dans leur longueur en cas de besoin.

9. Dispositif selon la revendication 8,
**caractérisé en ce que**
les éléments de liaison (15, 16) peuvent être modifiées dans leur longueur au moyens de systèmes d'entraînement mécaniques ou électriques.

10. Dispositif selon la revendication 1,
**caractérisé en ce qu'**
au moins un amortisseur de vibrations (22) est disposé entre le plateau de commande (13) et le moyeu de rotor (17) en direction axiale par rapport à l'arbre de générateur (19).

11. Dispositif selon la revendication 1,
**caractérisé en ce que**
des poids sont disposés en plus sur les pales de rotor (11) à une distance radiale par rapport à l'arbre de pale de rotor (3).
